# EUROPÄISCHE PATENTSCHRIFT

(11) **EP 1 764 493 B1**
(45) Veröffentlichungstag und Bekanntmachung des Hinweises auf die Patenterteilung: **12.06.2013**
(21) Anmeldenummer: 06120892.2
(22) Anmeldetag: 19.09.2006
(51) Int. Cl.: F02B 27/02

(54) **Frischgasanlage für eine Brennkraftmaschine**
Fresh air supply system for an internal combustion engine
Système d'alimentation d'air frais pour un moteur à combustion interne

(30) Priorität: 20.09.2005 DE 102005044935
(43) Veröffentlichungstag der Anmeldung: 21.03.2007
(73) Patentinhaber: Mahle International GmbH, 70376 Stuttgart (DE)
(72) Erfinder: Fischer, Oliver, 71384, Weinstadt (DE); Baumgartner, Horst, 70734 Fellbach (DE); Bruggesser, Veit, 71157 Hildrizhausen (DE)
(74) Vertreter: BRP Renaud & Partner

(56) Entgegenhaltungen:
- EP-A1- 0 747 587
- EP-A2- 0 733 790
- EP-A2- 1 291 504
- DE-A1- 4 311 081
- DE-A1- 19 651 642

## Beschreibung

Die vorliegende Erfindung betrifft eine Frischgasanlage für eine Brennkraftmaschine, insbesondere in einem Kraftfahrzeug, mit den Merkmalen des Oberbegriffs des Anspruchs 1.

Aus der DE 195 04 256 C2 ist eine Frischgasanlage bekannt, die einen Frischgasverteiler aufweist, über den einzelne Zylinder einer Brennkraftmaschine mit Frischgas versorgt werden. Der Frischgasverteiler weist für jeden zu versorgenden Zylinder eine Klappe zum Steuern eines Frischgaspfads auf, die im Frischgasverteiler um eine Schwenkachse schwenkverstellbar gelagert ist. Bei der bekannten Frischgasanlage ist der Frischgasverteiler als Schaltsaugrohranlage ausgestaltet, die für jeden Zylinder ein Saugrohr mit schaltbarer Länge aufweist. Das Umschalten zwischen den beiden Saugrohrlängen erfolgt dabei mit Hilfe der jeweiligen Klappe.

Im Betrieb der Frischgasanlage sind insbesondere die Klappen hohen Belastungen ausgesetzt, die beispielsweise zu Relativbewegungen zwischen der Klappe und einem in der Frischgasanlage ausgebildeten Kanal, in dem die Klappe angeordnet ist, führen können. Diese Relativbewegungen können zu einem unerwünschten Verschleiß führen und können eine unerwünschte Geräuschentwicklung mit sich bringen.

Die vorliegende Erfindung beschäftigt sich mit dem Problem, für eine Frischgasanlage der eingangs genannten Art eine verbesserte Ausführungsform anzugeben, die sich insbesondere durch eine reduzierte Geräuschentwicklung auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Klappe zumindest im Bereich einer quer zur Schwenkachse verlaufenden Längskante in der Nähe der Schwenkachse in axialer Richtung federelastisch auszugestalten. Erreicht wird dies bei der Erfindung durch einen den Klappenkörper durchdringenden Schlitz, der axial von der zugehörigen Längskante beabstandet ist, sich quer zur Schwenkachse erstreckt und dabei im wesentlichen zentrisch zur Schwenkachse angeordnet ist. Im Bereich des Schlitzes fehlt es einem Randbereich der Klappe an einer axialen Unterstützung, wodurch besagter Randbereich zumindest in der Nähe der Schwenkachse axial federelastisch beweglich ist. Der Werkstoff des Klappenkörpers ist dabei zur Erzielung einer derartigen Federelastizität gewählt. Durch einen solchen axial federelastischen, die Schwenkachse beinhaltenden oder umschließenden Randbereich kann die Klappe im montierten Zustand axial an einer Kanalwand federelastisch abgestützt werden, wobei die Kanalwand einen Kanal begrenzt, in dem die Klappe schwenkverstellbar angeordnet ist. Insbesondere ist es dadurch möglich, die Klappe zumindest in diesem axial federelastischen Bereich in axialer Richtung größer als die lichte Weite des zugehörigen Kanals zu dimensionieren, wodurch die Klappe im Einbauzustand unter axialen Vorspannung an besagter Kanalwand anliegt. Auf diese Weise kann eine Geräuschentwicklung aufgrund von Relativbewegungen reduziert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen perspektivischen Querschnitt durch eine Frischgasanlage,
- Fig. 2: ein vergrößertes Detail der Frischgasanlage im Bereich einer Klappe,
- Fig. 3: eine Ansicht auf eine verrippte Steuerseite eines Klappenkörpers der Klappe,
- Fig. 4: eine Ansicht auf eine unverrippte Steuerseite des Klappenkörpers der Klappe,
- Fig. 5: eine Ansicht auf die verrippte Steuerseite der Klappe mit Dichtkontur,
- Fig. 6: eine Ansicht auf die unverrippte Steuerseite der Klappe mit Dichtkontur.

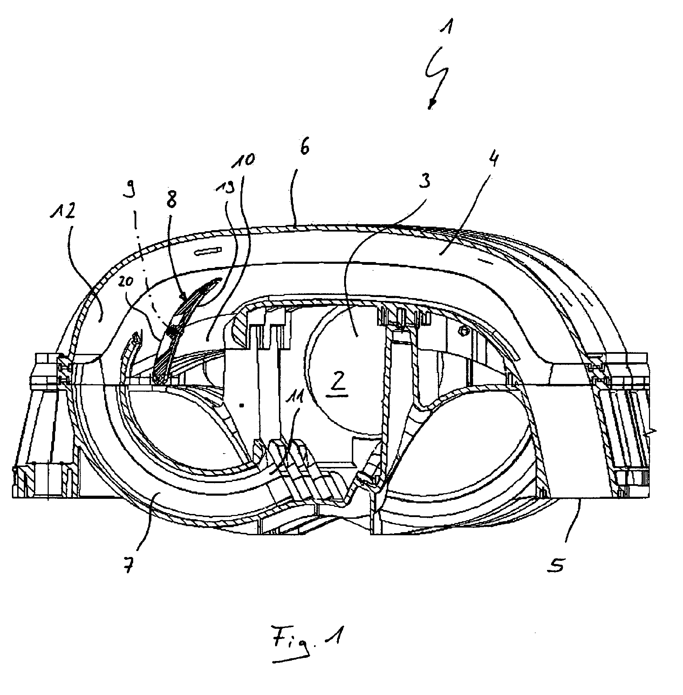

Entsprechend Fig. 1 umfasst eine Frischgasanlage zur Frischgasversorgung einer Brennkraftmaschine, die hierzu insbesondere in einem Kraftfahrzeug angeordnet ist, einen Frischgasverteiler 1, der so ausgestaltet ist, dass er mehrere Zylinder der hier nicht gezeigten Brennkraftmaschine mit Frischgas versorgen kann. Hierzu enthält der Frischgasverteiler 1 einen Sammelraum 2, in den Frischgas durch einen gemeinsamen Frischgaseinlass 3 eintritt. Beim Frischgas handelt es sich üblicherweise um Luft. Die Frischgasanlage kann stromauf des Frischgasverteilers 1 in üblicher Weise mit einem Luftfilter versehen sein. Auch kann die Frischgasanlage eine Ladeeinrichtung zur Erhöhung des Druckniveaus im Frischgas umfassen. Vom Sammelraum 2 gehen bei der hier gezeigten Ausführungsform des Frischgasverteilers 1 mehrere Saugrohre 4 ab, und zwar für jeden Zylinder zumindest eines. In der gezeigten Schnittdarstellung ist nur ein derartiges Saugrohr 4 im Schnitt erkennbar. Jedes Saugrohr 4 führt zu einem Frischgasauslass 5, über den das Frischgas in einen Motorblock der Brennkraftmaschine eintritt und dadurch zum jeweils zugeordneten Zylinder gelangt. Die Saugrohre 4 sind hier in ein Gehäuse 6 des Frischgasverteilers 1 integriert, wodurch dieser auch als Saugrohranlage oder als Saugmodul bezeichnet werden kann.

Bei der gezeigten Ausführungsform ist jedem Saugrohr 4 außerdem ein Verlängerungsrohr 7 zugeordnet, das bedarfsabhängig mit dem zugehörigen Saugrohr 4 verbindbar ist. Hierdurch ist es möglich, für das jeweilige Saugrohr 4 zwei unterschiedliche Saugrohrlängen zu schalten, um so in Abhängigkeit des Betriebszustands der Brennkraftmaschine Schwingungseffekte zur Ladungssteigerung ausnutzen zu können. Um die Saugrohrlängen schalten zu können, ist jedem Saugrohr 4 eine Klappe 8 zugeordnet, die um eine Schwenkachse 9 schwenkverstellbar am bzw. im Frischgasverteiler 1 gelagert ist. Die jeweilige Klappe 8 ist hierzu im Bereich eines ersten Einlasses 10 angeordnet, über den das jeweilige Saugrohr 4 direkt an den Sammelraum 2 angeschlossen ist. In der gezeigten Offenstellung der Klappe 8 ist der erste Einlass 10 geöffnet, wodurch das Frischgas vom Sammelraum 2 hauptsächlich durch den ersten Einlass 10 in das jeweilige Saugrohr 4 eintritt. Somit ist bei geöffneter Klappe 8 eine sich vom ersten Einlass 10 bis zum Auslass 5 erstreckende kurze Saugrohrlänge aktiv.

Wenn sich die Klappe 4 in ihrer Schließstellung befindet, sperrt sie den ersten Einlass 10 und verlängert dadurch gleichzeitig das Saugrohr 4 mit dem zugehörigen Verlängerungsrohr 7. Das jeweilige Verlängerungsrohr 7 mündet über einen zweiten Einlass 11 ebenfalls in den Sammelraum 2. Bei geschlossener Klappe 8 strömt somit das Frischgas durch den zweiten Einlass 11 und durch das jeweilige Verlängerungsrohr 7 in das zugehörige Saugrohr 4. Somit ist bei geschlossener Klappe 8 eine sich vom zweiten Einlass 11 bis zum Auslass 5 erstreckende große Saugrohrlänge aktiv. Es ist klar, dass grundsätzlich auch Zwischenstellungen für die Klappe 8 einstellbar sind, in der beide Saugrohrlängen aktiv sind. Ebenso ist es bei der gezeigten Ausführungsform grundsätzlich möglich, dass auch bei vollständig geöffneter Klappe 8 eine gewisse Frischgasmenge über das jeweilige Verlängerungsrohr 7 in das zugehörige Saugrohr 4 gelangt, da bei der hier gezeigten Ausführungsform die Klappe 8 in ihrer Offenstellung einen in das jeweilige Saugrohr 4 übergehenden Auslass 12 des zugehörigen Verlängerungsrohrs 7 nicht verschließt.

Da der Frischgasverteiler 1 somit hinsichtlich ihrer Länge schaltbare Saugrohre 4 aufweist, kann er auch als Schaltsaugrohranordnung bezeichnet werden. Obwohl beim hier beschriebenen, bevorzugten Ausführungsbeispiel die jeweilige Klappe 8 zum Schalten der Saugrohrlängen verwendet wird, ist die vorliegende Erfindung nicht auf Schaltsaugrohranlagen beschränkt. Grundsätzlich kann mit Hilfe der jeweiligen Klappe 8 im Frischgasverteiler 1 auch ein beliebiger anderer Frischgaspfad gesteuert werden. Beispielsweise kann die jeweilige Klappe 8 bei anderen Ausführungsformen von Frischgasverteilern 1 dazu genutzt werden, die Strömung durch einen Tumblekanal zur Erzeugung einer Tumbleströmung und/oder durch einen Drallkanal zur Erzeugung einer Drallströmung im jeweiligen Zylinder zu steuern.

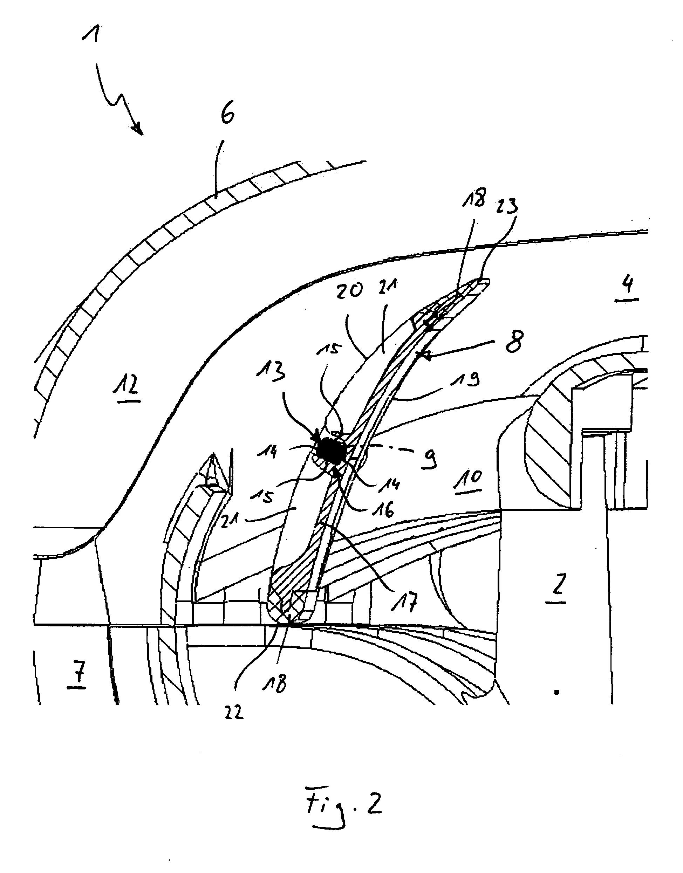

Entsprechend Fig. 2 ist zur Lagerung und zum Antreiben der jeweiligen Klappe 8 eine Welle 13 vorgesehen, die sich koaxial zur Schwenkachse 9 erstreckt und an der die jeweilige Klappe 8 drehfest angebracht ist. In axialer Richtung kann die jeweilige Klappe 8 an der Welle 13 verschiebbar gelagert sein oder an der Welle 13 fest fixiert sein. Bei der hier gezeigten, bevorzugten Ausführungsform weist die Welle 13 ein spezielles Profil auf, das zumindest an zwei diametral gegenüberliegenden Seiten jeweils einen Lagerabschnitt 14 und in Umfangsrichtung zwischen diesen Lagerabschnitten 14 zumindest einen Antriebsabschnitt 15 aufweist. Die Lagerabschnitte 14 charakterisieren sich dadurch, dass sie sich entlang von Kreisbögen erstrecken, die bei gleichem Radius konzentrisch zur Schwenkachse 9 der Klappe 8 verlaufen. Im Unterschied dazu charakterisiert sich der jeweilige Antriebsabschnitt 15 durch eine von der Kreisbogenform der Lagerabschnitte 14 abweichende Kontur. Beispielsweise ist der jeweilige Antriebsabschnitt 15 hier durch eine gerade Linie gebildet, die nach Art einer Sekante die beiden benachbarten Lagerabschnitte 14 miteinander verbindet. Im Beispiel sind zwei Antriebsabschnitte 15 vorgesehen, die sich diametral gegenüberliegen und die sich parallel zueinander erstrecken. Die jeweilige Klappe 8 besitzt einen Aufnahmeabschnitt 16, dessen Querschnittsprofil im wesentlichen komplementär zum Profil der Welle 13 ausgestaltet ist. In der Folge kommt es zwischen der Welle 13 und der Klappe 8 über die Antriebsabschnitte 15 zu einem Formschluss, der die Klappe 8 drehfest an der Welle 13 fixiert. Im Gehäuse 6 des Frischgasverteilers 1 sind beiderseits der jeweiligen Klappe 8 in nicht näher bezeichneten Wänden des jeweiligen Kanals, in dem die Klappe 8 angeordnet ist, Lageröffnungen ausgebildet. Im vorliegenden Fall sind die besagten Kanäle jeweils durch den stutzenförmig ausgestalteten Bereich des ersten Einlasses 10 gebildet. In diese im Gehäuse 6 ausgebildeten Lageröffnungen ist die Welle 13 eingesteckt. Die Lageröffnungen besitzen ein Innenprofil mit einem Kreisquerschnitt, dessen Radius dem der Kreisbögen der Lagerabschnitte 14 entspricht. In der Folge ist die Welle 13 in besagten Lageröffnungen über ihre Lagerabschnitte 14 konzentrisch zur Schwenkachse 9 drehbar gelagert. Somit können der Antrieb der jeweiligen Klappe 8 und deren Lagerung mit Hilfe nur eines einzigen Bauteils, nämlich mit Hilfe der entsprechend profilierten Welle 13 realisiert werden. Vorzugsweise besteht die Welle 13 aus einem Edelstahl.

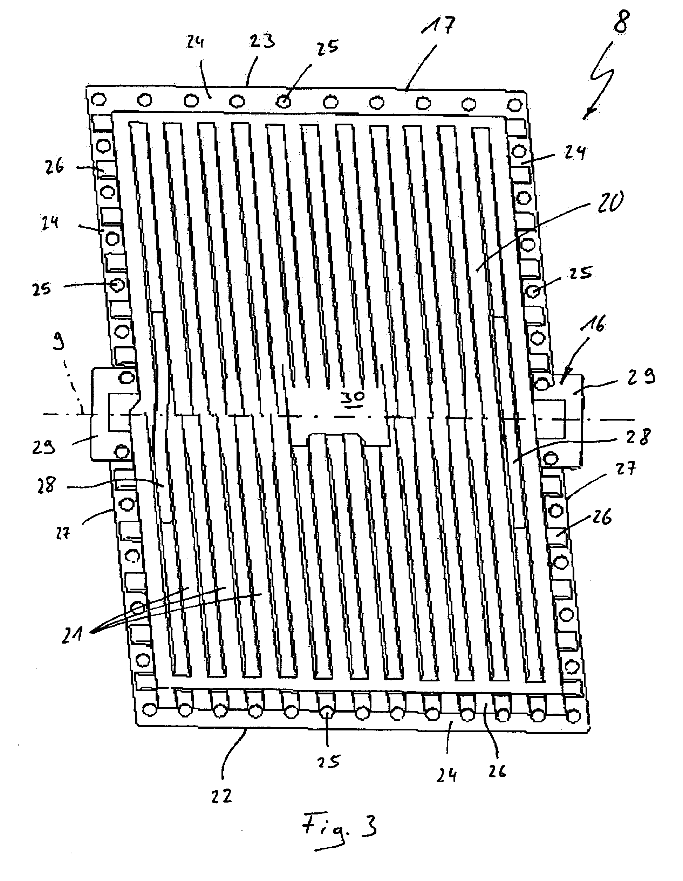

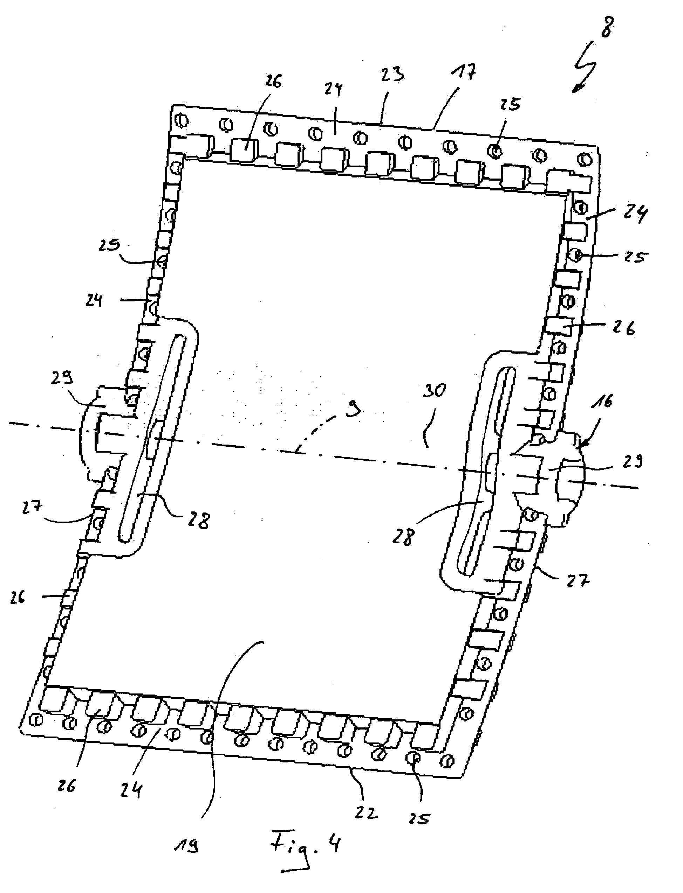

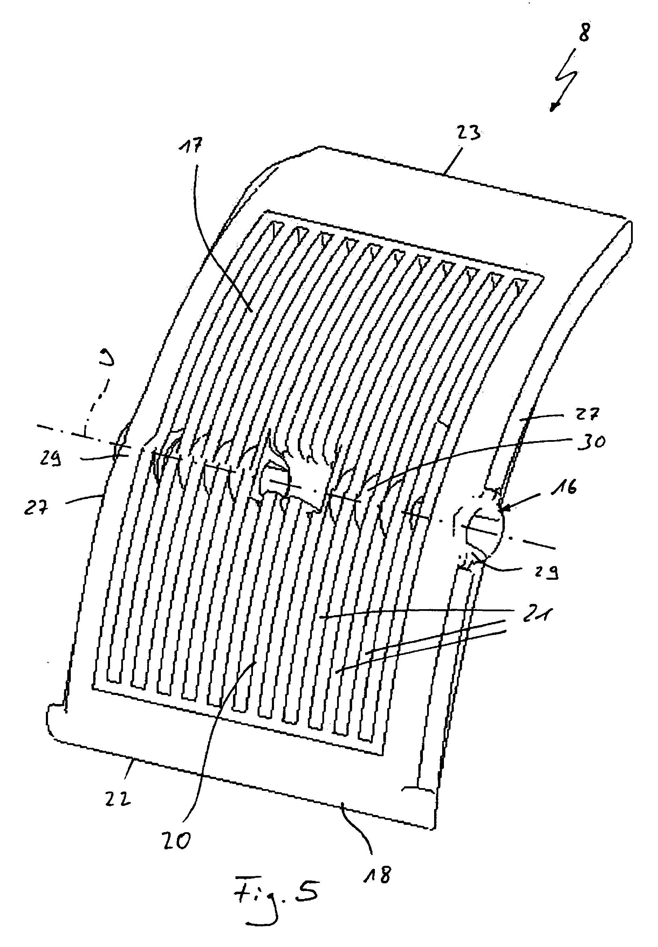

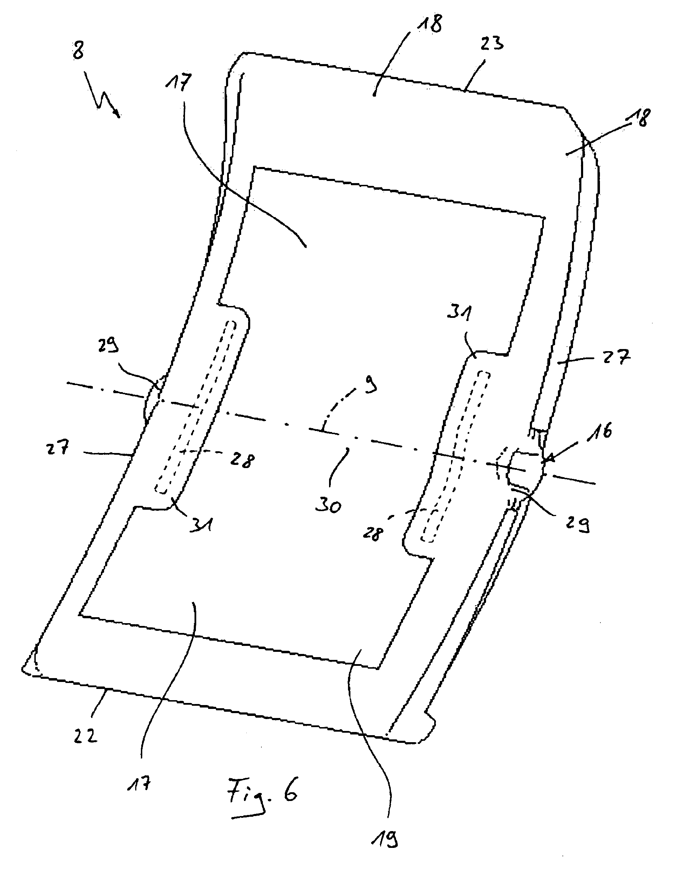

Die jeweilige Klappe 8 ist bei den hier gezeigten bevorzugten Ausführungsformen als Kunststoffteil ausgestaltet, und zwar als ein Zwei-Komponenten-Kunststoffteil. Die jeweilige Klappe 8 umfasst daher einen Klappenkörper 17 aus einem Körperwerkstoff sowie eine daran angespritzte Dichtkontur 18 aus einem Dichtungswerkstoff. Der Körperwerkstoff besitzt eine höhere Steifigkeit als der Dichtungswerkstoff. Der Dichtungswerkstoff besitzt eine höhere Elastizität als der Körperwerkstoff. Bei den Fig. 3 und 4 ist nur der Klappenkörper 17 dargestellt, während bei den Fig. 5 und 6 zusätzlich die Dichtkontur 18 dargestellt ist. Die Klappe 8 wird vorzugsweise in einer Zwei-Schuss-Technik hergestellt. Nach dem ersten Schuss liegt der Klappenkörper 17 gemäß den Fig. 3 und 4 vor. Mit dem zweiten Schuss wird die Dichtkontur 18 an den Klappenkörper 17 angespritzt, so dass nach dem zweiten Schuss die Klappe 8 gemäß den Fig. 5 und 6 vorliegt.

Entsprechend den Fig. 1 bis 6 besitzt die Klappe 8 zwei einander gegenüberliegende Steuerseiten 19 und 20, die im Betrieb der Frischgasanlage einer Frischgasströmung ausgesetzt sein können. Vorzugsweise ist eine dieser Steuerseiten, hier die mit 20 bezeichnete Steuerseite, verrippt, also mit Rippen 21 versehen. Im Unterschied dazu ist die andere Steuerseite, hier die mit 19 bezeichnete Steuerseite, unverrippt, also ohne Rippen und somit glatt ausgestaltet. Die unverrippte Steuerseite 19 zeichnet sich durch eine geschlossene Kontur aus, die in besonderer Weise zur Strömungsleitung und Strömungslenkung geeignet ist. Die verrippte Steuerseite 20 besitzt durch die Rippen 21 eine offene Kontur.

Entsprechend den Fig. 1 und 2 ist die jeweilige Klappe 8 bei der gezeigten, bevorzugten Ausführungsform so angeordnet, dass sie zumindest in einer Schaltstellung, bevorzugt in der gezeigten Offenstellung, eine Strömungsumlenkfunktion aufweist. Diese Strömungsumlenkung ergibt sich hier bei geöffnetem ersten Einlass 10 durch die Umlenkung der Frischgasströmung beim Übergang vom Sammelraum 2 durch den ersten Einlass 10 in das jeweilige Saugrohr 4. Die Klappe 8 unterstützt dabei diese Strömungsumlenkung, um den damit einhergehenden Druckverlust zu reduzieren. In dieser Schaltstellung weist die Klappe 8 eine dem Sammelraum 2 zugewandte Anströmseite (Luvseite), nämlich die mit 19 bezeichnete Steuerseite und eine vom Sammelraum 2 abgewandte Abströmseite (Leeseite), nämlich die mit 20 bezeichnete Steuerseite. Bevorzugt ist nun die verrippte Steuerseite 20 an der von der Frischgasanströmung abgewandten Seite der Klappe 8 ausgebildet, also an der Abströmseite. Im Unterschied dazu ist die unverrippte Steuerseite 19 bevorzugt an der Anströmseite ausgebildet. Insbesondere ist die unverrippte Steuerseite 19 zur Unterstützung der Strömungsumlenkfunktion geformt, insbesondere zum Sammelraum 2 hin konkav gekrümmt.

Wie den Schnittansichten der Fig. 1 und 2 entnehmbar ist, kann die jeweilige Klappe 8 vorzugsweise mit einem Strömungsprofil ausgestattet sein. Diese Strömungsprofil, das nach Art eines Tragflügelprofils mit einer stumpfen Anströmkante 22 und einer relativ spitzen Abströmkante 23 versehen ist, ergibt sich in der Projektion parallel zur Schwenkachse 9 bzw. in Längsschnitten, die sich quer zur Schwenkachse 9 erstrecken und die jeweils durch eine der Rippen 21 verlaufen. Das Strömungsprofil ist dabei so geformt, dass die jeweilige Klappe 8 in der Offenstellung die Strömungsumlenkfunktion unterstützt. Desweiteren kann das Strömungsprofil auch so ausgestaltet sein, dass es in der Schließstellung der Klappe 8 den Übergang vom jeweiligen Verlängerungsrohr 7 in das zugehörige Saugrohr 4 möglichst wenig beeinträchtigt.

Das Strömungsprofil ist des weiteren so gewählt, dass die Klappe 8 quer zur Strömungsrichtung und quer zur Schwenkachse 9 eine gewisse Dicke besitzt, die so groß ist, dass die Welle 13 und ebenso der Aufnahmebereich 16 vollständig innerhalb des Strömungsprofils verlaufen können. Hierdurch kann die Strömungsleitfunktion der Klappe 8 ohne davon abstehende Störkonturen realisiert werden.

Entsprechend den Fig. 3 und 5 erstrecken sich auf der verrippten Steuerseite 20 die einzelnen Rippen 21 vorzugsweise parallel zueinander sowie senkrecht zur Schwenkachse 9.

Entsprechend den Fig. 3 und 4 weist der Grundkörper 17 einen die Steuerseiten 19, 20 geschlossen einfassenden Randbereich 24 auf, an den die Dichtkontur 18 angespritzt wird. Zur intensiven Anbindung der Dichtkontur 18 an den Klappenkörper 17 ist besagter Randbereich 24 beispielsweise mit einer Vielzahl von Durchgangsöffnungen 25 versehen, die sich beim Anspritzen der Dichtkontur 18 mit dem Dichtungswerkstoff ausfüllen. Zusätzlich oder alternativ kann der Randbereich 24 mit einer Vielzahl von Stegen 26 versehen sein, die beim Anspritzen der Dichtkontur 18 vom Dichtungswerkstoff umschlossen werden.

Der Aufnahmebereich 16 ist innerhalb der jeweiligen Klappe 8 konzentrisch zur Schwenkachse 9 angeordnet und ist dabei so ausgestaltet, dass die Welle 13 durch ihn hindurchgeführt werden kann. In diesem Aufnahmenbereich 16 sind die Rippen 21 nicht durchgehend, vielmehr erstrecken sich die Rippen 21 jeweils bis zu diesem Aufnahmebereich 16.

Die Klappe 8 weist quer zur Schwenkachse 9 verlaufende Längskanten 27 auf. Entsprechend den Fig. 3 und 4 ist die Klappe 8 erfindungsgemäß zumindest im Bereich einer dieser Längskanten 27, vorzugsweise jedoch bei beiden Längskanten 27 jeweils mit einem Schlitz 28 versehen, der den Klappenkörper 17 im Bereich des Aufnahmebereichs 16 vollständig durchdringt. Der jeweilige Schlitz 28 erstreckt sich somit im Klappenkörper 17 von der einen Steuerseite 19 zur anderen Steuerseite 20. Dabei ist der jeweilige Schlitz 28 axial von der jeweils zugeordneten Längskante 27 beabstandet. Der jeweilige Schlitz 28 erstreckt sich beispielsweise über etwa ein Drittel der gesamten Länge der Klappe 8 und ist zentrisch zur Schwenkachse 9 angeordnet. Dementsprechend trennt der jeweilige Schlitz 28 an jeder axialen Seite der Klappe 8 jeweils einen Außenabschnitt 29 des Aufnahmebereichs 16 von einem Mittelabschnitt 30 des Aufnahmebereichs 16. Auch wenn die Elastizität des Körperwerkstoffs kleiner ist als diejenige des Dichtungswerkstoffs, besitzt der Klappenkörper 17 eine ausreichende Elastizität, um die durch die Schlitze 28 freigeschnittenen Außenabschnitte 29 in axialer Richtung federelastisch verstellen zu können.

Der Aufnahmebereich 16 ist zweckmäßig so dimensioniert, dass die Außenabschnitte 29 axial über die Längskanten 27 des Klappenkörpers 17 vorstehen. Insbesondere ist der Aufnahmebereich 16 so dimensioniert, dass die jeweilige Klappe 8 im Aufnahmebereich 16 axial eine Breite aufweist, die größer ist als eine axiale lichte Weite eines Kanals des Frischgasverteilers 1, in dem die Klappe 8 angeordnet ist. Im vorliegenden Fall handelt es sich bei diesem Kanal um den Bereich des ersten Einlasses 10. Durch die vorgeschlagene Bauweise ergibt sich durch die Montage der Klappe 8 eine axiale Vorspannung, mit welcher die Außenabschnitte 29 axial an einer entsprechenden Kanalwand anliegen. Hierdurch lassen sich Geräuschentwicklungen durch Relativbewegungen reduzieren. Vorzugsweise ist die Dichtkontur 18 so auf diese Bauweise abgestimmt, dass eine optimale Dichtungswirkung dann erzielt wird, wenn die Außenabschnitte 29 im montierten Zustand in der beschriebenen Weise (geringfügig) nach innen, also in Richtung des Mittelabschnitts 30 eingespannt sind, um die gewünschte, nach außen gerichtete Vorspannung zu erzeugen.

Vorzugsweise sind die Schlitze 28, mit denen die axiale Elastizität der Klappe 8 im Bereich der Außenabschnitte 29 hergestellt wird, durch einen elastischen Werkstoff verschlossen, wie dies insbesondere aus Fig. 6 hervorgeht. Durch die Verwendung eines elastischen Werkstoffs bleibt die axiale Nachgiebigkeit der Klappe 8 im Bereich der Außenabschnitte 29 erhalten, während gleichzeitig die Aerodynamik zumindest der unverrippten Steuerseite 19 verbessert wird. Außerdem kann so die Dichtwirkung der Klappe 8 für ihre jeweilige Schließstellung ebenfalls verbessert werden. Vorzugsweise wird der elastische Werkstoff zum Verschließen der Schlitze 28 mit dem Anspritzen der Dichtkontur 18 in die Schlitze 28 eingebracht. Vorzugsweise verschließt ein Teil des zur Ausbildung der Dichtkontur 18 angespritzten Dichtungswerkstoffs den jeweiligen Schlitz 28. Entsprechende Abschnitte der angespritzten Dichtkontur 18 sind in Fig. 6 mit 31 bezeichnet.

Die Dichtkontur 18 fasst die Steuerseiten 19, 20 randseitig ein und ist vorzugsweise geschlossen umlaufend ausgestaltet. Dabei ist klar, dass der Aufnahmebereich 16 die Dichtkontur 18 im Bereich der Außenabschnitte 29 axial durchdringt.

## Patentansprüche

1. Frischgasanlage für eine Brennkraftmaschine, insbesondere in einem Kraftfahrzeug,
- mit einem Frischgasverteiler (1) zum Versorgen von Zylindern der Brennkraftmaschine mit Frischgas,
- wobei der Frischgasverteiler (1) wenigstens eine Klappe (8) zum Steuern eines Frischgaspfads aufweist, die im oder am Frischgasverteiler (1) um eine Schwenkachse (9) schwenkverstellbar gelagert ist,
**dadurch gekennzeichnet,**
**dass** die jeweilige Klappe (8) im Bereich wenigstens einer ihrer quer zur Schwenkachse (9) verlaufenden Längskanten (27) einen den Klappenkörper (17) durchdringenden Schlitz (28) aufweist, der beabstandet zur jeweiligen Längskante (27) angeordnet ist und sich quer zur Schwenkachse (9) erstreckt.

2. Frischgasanlage nach Anspruch 1,
**dadurch gekennzeichnet,**
- **dass** die jeweilige Klappe (8) konzentrisch zur Schwenkachse (9) einen Aufnahmebereich (16) aufweist, durch den eine Welle (13) hindurchgeführt ist, mit der die Klappe (8) im oder am Frischgasverteiler (1) schwenkbar gelagert ist und an der die Klappe (8) drehfest angebracht ist,
- **dass** der jeweiligen Schlitz (28) so angeordnet ist, dass er einen Außenabschnitt (29) des Aufnahmebereichs (16) von einem Mittelabschnitt (30) des Aufnahmebereichs (16) trennt.

3. Frischgasanlage nach Anspruch 2,
**dadurch gekennzeichnet,**
**dass** der Aufnahmebereich (16) so dimensioniert ist, dass sein jeweiliger Abschnitt (29) axial über die jeweilige Längskante (27) des Klappenkörpers (17) vorsteht.

4. Frischgasanlage nach Anspruch 2 oder 3,
**dadurch gekennzeichnet,**
**dass** der Aufnahmebereich (16) so dimensioniert ist, dass die jeweilige Klappe (18) im Aufnahmebereich (16) axial breiter ist als ein Kanal des Frischgasverteilers (1), in dem die Klappe (8) angeordnet ist.

5. Frischgasanlage nach einem der Ansprüche 1 bis 4,
**dadurch gekennzeichnet,**
**dass** der jeweilige Schlitz (28) im Klappenkörper (17) durch einen elastischen Werkstoff verschlossen ist.

6. Frischgasanlage nach einem der Ansprüche 1 bis 5,
**dadurch gekennzeichnet,**
**dass** die jeweilige Klappe (8) randseitig eine geschlossen umlaufende Dichtkontur (18) aufweist, die an den (übrigen) Klappenkörper (17) angespritzt ist.

7. Frischgasanlage nach den Ansprüchen 5 und 6,
**dadurch gekennzeichnet,**
**dass** ein Teil des zur Ausbildung der Dichtkontur (18) angespritzten Dichtungswerkstoffs den jeweiligen Schlitz (28) verschließt.

8. Frischgasanlage nach einem der Ansprüche 1 bis 7,
**dadurch gekennzeichnet,**
**dass** die jeweilige Klappe (8) zwei einander gegenüberliegende, der Frischgasströmung aussetzbare Steuerseiten (19, 20) aufweist, von den die eine verrippt ist.

9. Frischgasanlage nach Anspruch 8,
**dadurch gekennzeichnet,**
**dass** bei der jeweiligen Klappe (8) die andere Steuerseite (19) unverrippt ist.

10. Frischgasanlage nach Anspruch 8 oder 9,
**dadurch gekennzeichnet,**
- **dass** die jeweilige Klappe (8) so ausgestaltet ist, dass sie zumindest in einer Schaltstellung eine Strömungsleitfunktion aufweist,
- **dass** die in dieser Schaltstellung von der Frischgasanströmung abgewandte Seite der Klappe (8) durch deren verrippte Steuerseite (20) gebildet ist.

11. Frischgasanlage nach Anspruch 10,
**dadurch gekennzeichnet,**
**dass** die jeweilige Klappe (8) in quer zur Schwenkachse (9) und jeweils durch eine Rippe (21) verlaufenden Längsschnitten ein Strömungsprofil aufweist, das in dieser Schaltstellung die Strömungsumlenkfunktion der Klappe (8) unterstützt.

12. Frischgasanlage nach den Ansprüche 8 und 11,
**dadurch gekennzeichnet,**
**dass** sich bei der jeweiligen Klappe (8) die Rippen (21) auf der verrippten Steuerseite (20) parallel zueinander und/oder senkrecht zur Schwenkachse (9) erstrecken.

## Claims

1. A fresh air system for an internal combustion engine, in particular in a motor vehicle,
- comprising a fresh air distributor (1) for supplying fresh air to cylinders of the internal combustion engine,
- wherein the fresh air distributor (1) has at least one flap (8) for controlling a fresh air path that is mounted so as to be adjustable and pivotable about a pivot axis (9) in or on the fresh air distributor (1),
**characterized in**
**that** the respective flap (8), in the region of at least one of its longitudinal edges (27) running transverse to the pivot axis (9), has a slot (28) that penetrates through the flap body (17), is arranged spaced apart from the respective longitudinal edge (27), and extends transverse to the pivot axis (9).

2. The fresh air system according to claim 1, **characterized in**
- **that** concentric to the pivot axis (9), the respective flap (8) has a receiving region (16) through which a shaft (13) is fed, by means of which shaft the flap (8) is pivotably mounted in or on the fresh air distributor (1) and on which the flap (8) is attached in a rotatably fixed manner,
- **that** the respective slot (28) is arranged in such a manner that it separates an outer section (29) of the receiving region (16) from a centre section (30) of the receiving region (16).

3. The fresh air system according to claim 2,
**characterized in**
**that** the receiving region (16) is dimensioned such that its respective section (29) projects axially beyond the respective longitudinal edge (27) of the flap body (17).

4. The fresh air system according to claim 2 or claim 3,
**characterized in**
**that** the receiving region (16) is dimensioned such that the respective flap (18) is axially wider in the receiving region (16) than a channel of the fresh air distributor (1) in which the flap (8) is arranged.

5. The fresh air system according to any one of the claims 1 to 4,
**characterized in**
**that** the respective slot (28) in the flap body (17) is closed by an elastic material.

6. The fresh air system according to any one of the claims 1 to 5,
**characterized in**
**that** the respective flap (8) has on the edge side a closed, circumferentially extending sealing contour (18) that is injection moulded on the (remaining) flap body (17).

7. The fresh air system according to the claims 5 and 6,
**characterized in**
**that** a portion of the sealing material that is injection moulded for forming the sealing contour (18) closes the respective slot (28).

8. The fresh air system according to any one of the claims 1 to 7,
**characterized in**
**that** the respective flap (8) has two control sides (19, 20) which oppose each other and can be exposed to the fresh air flow, the one side of which is ribbed.

9. The fresh air system according to claim 8,
**characterized in**
**that** in the case of said respective flap (8), the other control side (19) is unribbed.

10. The fresh air system according to claim 8 or claim 9,
**characterized in**
- **that** the respective flap (8) is configured such that it has a flow diverting function at least in one switching position,
- **that** the side of the flap (8) that faces away from the fresh gas inflow in this switching position is formed by the flap's ribbed control side (20).

11. The fresh air system according to claim 10,
**characterized in**
**that** the respective flap (8) has a flow profile in longitudinal sections running transverse to the pivot axis (9) and in each case through a rib (21), which flow profile supports in this switching position the flow diverting function of the flap (8).

12. The fresh air system according to the claims 8 and 11,
**characterized in**
**that** in the case of the respective flap (8), the ribs (21) on the ribbed control side (20) extend parallel to each other and/or perpendicular to the pivot axis (9).

## Revendications

1. Système d'alimentation de gaz frais pour un moteur à combustion interne, notamment dans un véhicule automobile,
- comportant un distributeur de gaz frais (1) pour alimenter en gaz frais les cylindres du moteur à combustion interne,
- dans lequel le distributeur de gaz frais (1) présente au moins un clapet (8) pour commander un trajet de gaz frais, qui est positionné de manière pivotante réglable autour d'un axe de pivotement (9) dans ou sur le distributeur de gaz frais (1),
**caractérisé en ce que**
le clapet respectif (8) présente au niveau d'au moins une arête longitudinale (27) s'étendant transversalement à l'axe de pivotement (9) une fente (28) traversant le corps de clapet (17), qui est disposée en espacement par rapport à l'arête longitudinale respective (27) et s'étend transversalement à l'axe de pivotement (9).

2. Système d'alimentation de gaz frais selon la revendication 1,
**caractérisé en ce que**
- le clapet respectif (8) présente concentriquement à l'axe de pivotement (9) une zone de réceptacle (16), à travers laquelle un arbre (13) est guidé, avec laquelle le clapet (8) est positionné de manière pivotante dans ou sur le distributeur de gaz frais (1) et sur laquelle le clapet (8) est monté de manière solidaire en rotation,
- la fente respective (28) est disposée de telle sorte qu'elle sépare une portion extérieure (29) de la zone de réceptacle (16) d'une portion centrale (30) de la zone de réceptacle (16).

3. Système d'alimentation de gaz frais selon la revendication 2,
**caractérisé en ce que**
la zone de réceptacle (16) est dimensionnée de telle sorte que sa portion respective (29) dépasse axialement par-dessus l'arête longitudinale respective (27) du corps de clapet (17).

4. Système d'alimentation de gaz frais selon les revendications 2 ou 3,
**caractérisé en ce que**
la zone de réceptacle (16) est dimensionnée de telle sorte que le clapet respectif (18) dans la zone de réceptacle (16) soit plus large axialement qu'un canal du distributeur de gaz frais (1), dans lequel le clapet (8) est disposé.

5. Système d'alimentation de gaz frais selon une des revendications 1 à 4,
**caractérisé en ce que**
la fente respective (28) dans le corps de clapet (17) est obturée par un matériau élastique.

6. Système d'alimentation de gaz frais selon une des revendications 1 à 5,
**caractérisé en ce que**
le clapet respectif (8) présente du côté du bord un contour d'étanchéité (18) circonférentiel fermé, qui est moulé par injection sur le (reste du) corps de clapet (17).

7. Système d'alimentation de gaz frais selon les revendications 5 et 6,
**caractérisé en ce qu'**
une partie du matériau d'étanchéité injecté afin de réaliser le contour d'étanchéité (18) obture la fente respective (28).

8. Système d'alimentation de gaz frais selon une des revendications 1 à 7,
**caractérisé en ce que**
le clapet respectif (8) présente deux façades de distribution (19, 20) en vis-à-vis, exposées à l'écoulement de gaz frais, desquelles un est nervuré.

9. Système d'alimentation de gaz frais selon la revendication 8,
**caractérisé en ce que**
sur le clapet respectif (8) l'autre façade de distribution (19) n'est pas nervurée.

10. Système d'alimentation de gaz frais selon les revendications 8 ou 9,
**caractérisé en ce que**
- le clapet respectif (8) est conçu de telle sorte qu'il présente au moins dans une position de commutation une fonction de guidage d'écoulement,
- le côté du clapet (8) qui se détourne dans cette position de commutation de l'écoulement d'entrée de gaz frais est formé par la façade de distribution nervurée (20) de celui-ci.

11. Système d'alimentation de gaz frais selon la revendication 10,
**caractérisé en ce que**
le clapet respectif (8) présente un profilé d'écoulement dans des sections longitudinales s'étendant transversalement à l'axe de pivotement (9) et respectivement à travers une nervure (21), qui assiste dans cette position de commutation la fonction de déviation d'écoulement du clapet (8).

12. Système d'alimentation de gaz frais selon les revendications 8 et 11,
**caractérisé en ce que**
sur le clapet respectif (8) les nervures (21) sur la façade de distribution nervurée (20) s'étendent parallèlement les unes aux autres et/ou perpendiculairement à l'axe de pivotement (9).
